# EUROPEAN PATENT SPECIFICATION

(11) **EP 3 843 360 B1**
(45) Date of publication and mention of the grant of the patent: **12.07.2023**
(21) Application number: 19219297.9
(22) Date of filing: 23.12.2019
(51) Int. Cl.: H04L 67/14

(54) **SESSION MANAGEMENT FUNCTION, APPLICATION FUNCTION, METHOD OF OPERATING A SESSION MANAGEMENT FUNCTION, METHOD OF OPERATING AN APPLICATION FUNCTION, AND NON-TRANSIENT COMPUTER-READABLE STORAGE MEDIUM**
SITZUNGSVERWALTUNGSFUNKTION, ANWENDUNGSFUNKTION, VERFAHREN ZUM BETRIEB EINER SITZUNGSVERWALTUNGSFUNKTION, VERFAHREN ZUM BETRIEB EINER ANWENDUNGSFUNKTION UND NICHTFLÜCHTIGES COMPUTERLESBARES SPEICHERMEDIUM
FONCTION DE GESTION DE SESSIONS, FONCTION D'APPLICATION, PROCÉDÉ DE FONCTIONNEMENT D'UNE FONCTION DE GESTION DE SESSIONS, PROCÉDÉ DE FONCTIONNEMENT D'UNE FONCTION D'APPLICATION ET SUPPORT D'ENREGISTREMENT NON TRANSITOIRE LISIBLE PAR ORDINATEUR

(43) Date of publication of application: 30.06.2021
(73) Proprietor: NTT DoCoMo, Inc., Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MUTIKAINEN, JARI, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- US-A1- 2019 158 408

## Description

### Technical Field

Various embodiments relate generally to a session management function, an application function, a method of operating a session management function, a method of operating an application function, and a non-transient computer-readable storage medium.

Prior art document US 2019/158408 A1 discloses a method and an apparatus for traffic routing an path optimization.

### Background

Nowadays steering data traffic in and/or through a mobile radio communication network, e.g. 5G, becomes an increasing issue.

### Summary

It is an object of the present invention to provide a session management function of a mobile radio communication network, which enables to steer data traffic between a first Application Function outside the mobile radio communication network and a second Application Function outside the mobile radio communication network for processing the corresponding data at least in part at the location of the first Application Function and at least in part at the location of the second Application function, wherein the first location is different from the second location.

It is an object of the present invention to provide an Application Function outside a mobile radio communication network, which enables to steer data traffic between the Application Function and a second Application Function outside the mobile radio communication network for processing the corresponding data at least in part at the location of the Application Function and at least in part at the location of the second Application function, wherein the first location is different from the second location.

It is an object of the present invention to provide a method of operating a session management function of a mobile radio communication network, which enables to steer data traffic between a first Application Function outside the mobile radio communication network and a second Application Function outside the mobile radio communication network for processing the corresponding data at least in part at the location of the first Application Function and at least in part at the location of the second Application function, wherein the first location is different from the second location.

It is an object of the present invention to provide a method of operating an Application Function outside of a mobile radio communication network, which enables to steer data traffic between the Application Function and a second Application Function outside the mobile radio communication network for processing the corresponding data at least in part at the location of the Application Function and at least in part at the location of the second Application function, wherein the first location is different from the second location.

It is an object of the present invention to provide a non-transient computer-readable storage medium, which enables to steer data traffic between a first Application Function outside a mobile radio communication network and a second Application Function outside a mobile radio communication network for processing the corresponding data at least in part at the location of the first Application Function and at least in part at the location of the second Application function, wherein the first location is different from the second location.

An object of the invention is solved by a Session Management Function (SMF) of a mobile radio communication network including one or more processors configured to: provide a Session Management Function (SMF); receive a steering request message via a Network Exposure Function (NEF) and/or Policy Control Function (PCF), the steering request message requesting to establish a communication connection between a first Application Function (AF) and a second Application Function (AF), wherein the first AF and the second AF are located outside the mobile radio communication network, the steering request message including a first information allowing the determination of a first interface associated with a first network the first AF is located in and a second information allowing the determination of the a second interface associated with a second network the second AF is located in; and establish the communication connection between the first AF and the second AF through the mobile radio communication network and via the first interface and via the second interface using the first information and/or the second information.

The first AF may include a centralized Application Server (CAS) or an Edge Application Server (EAS). Alternatively or additionally, the the second AF may include an Edge Application Server (EAS) or a centralized Application Server (CAS). The first and/or the second interface may be N6 interfaces.

In one or more embodiments, the first information of the steering request message may include a Data Network Access Identifier (DNAI) of a first User Plane Function associated with the first network along with Steering Indication; the second information of the steering request message may include a Data Network Access Identifier (DNAI) of a second User Plane Function associated with the second network along with Steering Indication; the first information of the steering request message may include a first AF Service identifier (ID) of the first AF; and/or the second information of the steering request message may include a second AF Service identifier (ID) of the second AF.

Alternatively or additionally, the steering request message further may include at least one of the following communication connection endpoint information: first AF geographical area information; second AF geographical area information; first and/or second interface IP address; first and/or second interface characteristics; first AF Internet Protocol (IP) address; first AF Medium Access Control (MAC) address; second AF Internet Protocol (IP) address; second AF Medium Access Control (MAC) address; first and/or second interface Network Instance identifier; characteristics of an associated mobile radio communication terminal device; and authorization information indicating an authorization of the first AF.

Alternatively or additionally, the steering request message may further include at least one of the following steering information: information about one or more Network Functions of the mobile radio communication network; information about Policy and Charging Control (PCC) rules to be applied to the established communication connection; Data Network Name (DNN) and/or Single Network Slice Selection Assistance Information (S-NSSAI) of the mobile radio communication network; characteristics of an associated mobile radio communication terminal device; characteristics of the Protocol Data Unit (PDU) session; and characteristics of a network instance of the communication connection within the mobile radio communication network.

The network may include an Edge Hosting Environment including an Edge Application Server. Alternatively or additionally, the first network and/or the second network are/is a data network.

In one or more embodiments, the network is a 5G Core Network. For example, the network is a Control Plane 5G Core Network.

The one or more processors may further be configured to determine one or more PCC rules from an associated Policy Control Function (PCF) of the mobile radio communication network.

An object of the invention is solved by an Application Function (AF), including one or more processors configured to: provide an Application Function (AF); generate a steering request message, the steering request message requesting to establish a communication connection between the Application Function (AF) and a second Application Function (AF), wherein the AF and the second AF are located outside a mobile radio communication network in which a Session Management Function is located, the steering request message including a first information allowing the determination of a first interface associated with a first network the AF is located in and a second information allowing the determination of a second interface associated with a second network the second AF is located in; and send the steering request message via a Network Exposure Function (NEF) and/or Policy Control Function (PCF) to the SMF.

The AF may include a centralized Application Server (CAS) or an Edge Application Server (EAS). Alternatively or additionally, the second AF may include an Edge Application Server (EAS) or a centralized Application Server (CAS).

In one or more embodiments, the first information of the steering request message may include a Data Network Access Identifier (DNAI) of a first User Plane Function associated with the first network along with Steering Indication; the second information of the steering request message may include a Data Network Access Identifier (DNAI) of a second User Plane Function associated with the second network along with Steering Indication; the first information of the steering request message may include a first AF Service identifier (ID) of the AF; and/or the second information of the steering request message may include a second AF Service identifier (ID) of the second AF.

Alternatively or additionally, the steering request message may further include at least one of the following communication connection endpoint information: AF geographical area information; second AF geographical area information; first and/or second interface IP address; first and/or second interface characteristics; AF Internet Protocol (IP) address; AF Medium Access Control (MAC) address; second AF Internet Protocol (IP) address; second AF Medium Access Control (MAC) address; first and/or second interface Network Instance identifier; characteristics of an associated mobile radio communication terminal device; and authorization information indicating an authorization of the AF.

Alternatively or additionally, the steering request message may further include at least one of the following steering information: information about one or more Network Functions of the mobile radio communication network; information about Policy and Charging Control (PCC) rules to be applied to the established communication connection; Data Network Name (DNN) and/or Single Network Slice Selection Assistance Information (S-NSSAI) of the mobile radio communication network; characteristics of an associated mobile radio communication terminal device; characteristics of the Protocol Data Unit (PDU) session; and characteristics of a network instance of the communication connection within the mobile radio communication network.

The network may include an Edge Hosting Environment including an Edge Application Server. Alternatively or additionally, the first network and/or the second network may be a data network.

In one or more embodiments, the network may be a 5G Core Network. For example, the network may be a Control Plane 5G Core Network.

The one or more processors may be further configured to determine one or more PCC rules from an associated Policy Control Function (PCF) of the mobile radio communication network.

An object of the invention is solved by a method of operating a Session Management Function (SMF) of a mobile radio communication network, the method including: providing a Session Management Function (SMF); receiving a steering request message via a Network Exposure Function (NEF) and/or Policy Control Function (PCF), the steering request message requesting to establish a communication connection between a first Application Function (AF) and a second Application Function (AF), wherein the first AF and the second AF are located outside the mobile radio communication network, the steering request message including a first information allowing the determination of the a first interface associated with a first network the first AF is located in and a second information allowing the determination of a second interface associated with a second network the second AF is located in; and establishing the communication connection between the first AF and the second AF through the mobile radio communication network and via the first interface and via the second interface using the first information and/or the second information.

The the first AF may include a centralized Application Server (CAS) or an Edge Application Server (EAS). The second AF may include an Edge Application Server (EAS) or a centralized Application Server (CAS).

In one or more embodiments the first information of the steering request message may include a Data Network Access Identifier (DNAI) of a first User Plane Function associated with the first network along with Steering Indication; the second information of the steering request message may include a Data Network Access Identifier (DNAI) of a second User Plane Function associated with the second network along with Steering Indication; the first information of the steering request message may include a first AF Service identifier (ID) of the first AF; and/or the second information of the steering request message may include a second AF Service identifier (ID) of the second AF.

Alternatively or additionally, the steering request message further may include at least one of the following communication connection endpoint information: first AF geographical area information; second AF geographical area information; first and/or second interface IP address; first and/or second interface characteristics; first AF Internet Protocol (IP) address; first AF Medium Access Control (MAC) address; second AF Internet Protocol (IP) address; second AF Medium Access Control (MAC) address; first and/or second interface Network Instance identifier; characteristics of an associated mobile radio communication terminal device; and authorization information indicating an authorization of the first AF.

Alternatively or additionally, the steering request message may further include at least one of the following steering information: information about one or more Network Functions of the mobile radio communication network; information about Policy and Charging Control (PCC) rules to be applied to the established communication connection; Data Network Name (DNN) and/or Single Network Slice Selection Assistance Information (S-NSSAI) of the mobile radio communication network; characteristics of an associated mobile radio communication terminal device; characteristics of the Protocol Data Unit (PDU) session; and characteristics of a network instance of the communication connection within the mobile radio communication network.

The network may include an Edge Hosting Environment including an Edge Application Server. The first network and/or the second network each may be a data network.

In one or more embodiments the network may be a 5G Core Network. For example, the network may be a Control Plane 5G Core Network.

The method may further include: determining one or more PCC rules from an associated Policy Control Function (PCF) of the mobile radio communication network.

An object of the invention is solved by a method of operating an Application Function (AF), the method including: providing an Application Function (AF); generating a steering request message, the steering request message requesting to establish a communication connection between the Application Function (AF) and a second Application Function (AF), wherein the AF and the second AF are located outside a mobile radio communication network in which a Session Management Function is located, the steering request message including a first information allowing the determination of a first interface associated with a first network the AF is located in and a second information allowing the determination of a second interface associated with a second network the second AF is located in; sending the steering request message via a Network Exposure Function (NEF) and/or Policy Control Function (PCF) to the SMF.

The AF may include a centralized Application Server (CAS) or an Edge Application Server (EAS). The second AF may include an Edge Application Server (EAS) or a centralized Application Server (CAS).

In one or more embodiments the first information of the steering request message may include a Data Network Access Identifier (DNAI) of a first User Plane Function associated with the first network along with Steering Indication; the second information of the steering request message may include a Data Network Access Identifier (DNAI) of a second User Plane Function associated with the second network along with Steering Indication; the first information of the steering request message may include a first AF Service identifier (ID) of the AF; and/or the second information of the steering request message may include a second AF Service identifier (ID) of the second AF.

The steering request message may further include at least one of the following communication connection endpoint information: AF geographical area information; second AF geographical area information; first and/or second interface IP address; first and/or second interface characteristics; AF Internet Protocol (IP) address; AF Medium Access Control (MAC) address; second AF Internet Protocol (IP) address; second AF Medium Access Control (MAC) address; first and/or second interface Network Instance identifier; characteristics of an associated mobile radio communication terminal device; and authorization information indicating an authorization of the AF.

The steering request message may further include at least one of the following steering information: information about one or more Network Functions of the mobile radio communication network; information about Policy and Charging Control (PCC) rules to be applied to the established communication connection; Data Network Name (DNN) and/or Single Network Slice Selection Assistance Information (S-NSSAI) of the mobile radio communication network; characteristics of an associated mobile radio communication terminal device; characteristics of the Protocol Data Unit (PDU) session; and characteristics of a network instance of the communication connection within the mobile radio communication network.

The network may include an Edge Hosting Environment including an Edge Application Server. Alternatively or additionally, the first network and/or the second network may be a data network.

In one or more embodiments the network may be a 5G Core Network. For example, the network may be a Control Plane 5G Core Network.

The one or more processors may further be configured to determine one or more PCC rules from an associated Policy Control Function (PCF) of the mobile radio communication network.

An object of the invention is solved by a non-transient computer-readable storage medium storing instruction, when executed by a processor, implementing a method of operating a Session Management Function of a mobile radio communication network, as explained above.

An object of the invention is solved by a non-transient computer-readable storage medium storing instruction, when executed by a processor, implementing a method of operating an Application Function of a mobile radio communication network, as explained above.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a first network scenario in accordance with one embodiment;
FIGS. 2 shows a second network scenario in accordance with one embodiment;
FIG. 3 shows a third network scenario in accordance with one embodiment;
FIG. 4 shows a fourth network scenario in accordance with one embodiment;
FIG. 5 shows a fifth network scenario in accordance with one embodiment;
FIG. 6 shows a first message sequence diagram in accordance with one embodiment;
FIG. 7 shows a second message sequence diagram in accordance with one embodiment;
FIG. 8 shows a third message sequence diagram in accordance with one embodiment;
FIG. 9 shows a fourth message sequence diagram in accordance with one embodiment;
FIG. 10 shows a fifth message sequence diagram in accordance with one embodiment.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface, may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

Steering data traffic in and/or through a mobile radio communication network, e.g. 5G, becomes an increasing issue. For example, there are efforts to steer application traffic between applications outside of the mobile radio communication network through the mobile radio communication network for processing the corresponding data at corresponding locations outside of the mobile radio communication network. For example a part of the processing should be carried out at a local Application Server outside the mobile radio communication network first and another part of the processing should be carried out at one or more central application server(s) or at a user terminal outside the mobile radio communication network. Alternatively, a part of the processing is carried out at a central Application Server or the user terminal outside the mobile radio communication network first and then another poart of the processing is carried out at the local application server outside the mobile radio communication network. The corresponding data traffic may be routed via a data network and/or the internet, back via the 5GC or using multiple PDU sessions. However, with conventional approaches the outside the mobile radio communication network is not aware that the application traffic needs to be processed via the local network, for example a N6-LAN, and the central network, for example a N6-LAN.

Possible use cases are for example Vehicle-to-Infrastructure (V2I) communications, Video analytics services, and/or virtual reality (VR) rendering services, e.g. for network gaming, e.g. for a VR Kicker.

For example, in a Vehicle-to-Infrastructure (V2I) communication a roadside application deployed on an Edge Application Server (EAS) may receive local messages directly from applications in the corresponding vehicles and roadside sensors, analyse them and then propagate (with extremely low latency) hazard warnings. The roadside application may also send an analysis based on local information to the connected car central Application Server (CAS) for further processing.

Regarding Video analytics services, an Application Server (AS) deployed in a local Data Network (DN) may be responsible for local video raw data pre-possessing. The corresponding application at the local DN may transcode and store the captured video streams from cameras received over the mobile communication network, e.g. 5G-NR (New Radio). The raw data then may be abstracted and compressed to metadata in smaller size fitting for backhaul transmission. After that, the local Application Server may send the metadata to the CAS for further processing. This may be used, for example in theft prevention and/or physical intrusion detection, where the local Application Server may constantly receive UL (Uplink) data flow from video cameras and analyses the corresponding image to check anything abnormal. The local Application Server may forward the image to the central server only when something abnormal has been detected.

Further, with respect to the VR rendering service for network gaming, e.g. a VR Kicker, the local Application Server may send pose data, audio data and/or text data of the game player to the CAS (i.e. the game server). The CAS may collect the information from different game players in the same game scenario and then may provide the information to the different local Application Servers. When the local Application Server retrieves pose data, audio data and text data of other game players, it may perform the real-time rendering for the game player and finally may transmit the video stream to the user terminal, which may be referred to as User Equipment (UE) in the following.

An Application Function (AF) at an AS may influence the routing of the data traffic as defined in TS 23.501, Clause 5.6.7, and/or as shown in the following table:

| **Information Name** | **Applicable for PCF or NEF (NOTE 1)** | **Applicable for NEF only** | **Category** |
|---|---|---|---|
| **Traffic Description** | Defines the target traffic to be influenced, represented by the combination of DNN and optionally S-NSSAI, and application identifier or traffic filtering information. | The target traffic can be represented by AF-Service-Identifier, instead of combination of DNN and optionally S-NSSAI. | Mandatory |
| **Potential Locations of Applications** | Indicates potential locations of applications, represented by a list of DNAI(s). | The potential locations of applications can be represented by AF-Service-Identifier. | Conditiona (NOTE 2)I |
| **Target UE Identifier(s)** | Indicates the UE(s) that the request is targeting, i.e. an individual UE, a group of UE represented by Internal Group Identifier, or any UE accessing the combination of DNN, S-NSSAI and DNAI(s). | GPSI can be applied to identify the individual UE, or External Group Identifier can be applied to identify a group of UE. | Mandatory |
| **Spatial Validity Condition** | Indicates that the request applies only to the traffic of UE(s) located in the specified location, represented by areas of validity. | The specified location can be represented by a list of geographic zone identifier(s). | Optional |
| **AF transaction identifier** | The AF transaction identifier refers to the AF request. | N/A | Mandatory |
| **Traffic Routing requirements** | Routing profile ID and/or N6 traffic routing information corresponding to each DNAI. | N/A | Optional |
| **Application Relocation Possibility** | Indicates whether an application can be relocated once a location of the application is selected by the 5GC. | N/A | Optional |
| **UE IP address preservation indication** | Indicates UE IP address should be preserved. | N/A | Optional |
| **Temporal Validity Condition** | Time interval(s) or duration(s). | N/A | Optional |
| **Information on AF subscription to corresponding SMF events** | Indicates whether the AF subscribes to change of UP path of the PDU Session and the parameters of this subscription. | N/A | Optional |

| | | | |
|---|---|---|---|
| NOTE 1: When the AF request targets existing or future PDU sessions of multiple UE(s) or of any UE and is sent via the NEF, as described in clause 6.3.7.2, the information is stored in the Unified Data Repository (UDR) by the NEF and is notified to the PCF by the UDR. NOTE 2: The potential locations of applications and traffic routing requirements may be absent only if the request is for subscription to notifications about UP path management events only. | | | |

Alternatively or additionally, in one or more embodiments endpoint details in a Steering Request from an AF and/or between Network Functions (NFs), e.g. 5GC NFs, may contain geographical area information of the EAS and/or CAS; first and/or second interface details, e.g. N6 interface details, DNAI, IP address, and/or Network Instance details (as defined in clause 5.6.12 of TS 23.501); AF-Service-Identifier (as defined in clause 5.6.7 of TS 23.501); EAS and CAS addresses, e.g. IP and/or MAC addresses; UE details, e.g. GPSI, UE's IP address; and/or AF details, e.g. AF address and/or authorization details.

Alternatively or additionally, in one or more embodiments the Steering information between the NFs, e.g. 5GC NFs, may contain: Serving NF, e.g. 5GC NFs, details, e.g. Service Management Function (SMF)-, Policy Control Function (PCF)-, User Plane Function (UPF)-, PDU Session Anchor (PSA)- and/or Network Exposure Function (NEF)-addresses; PCC rules including notification for charging; Data Network Name (DNN) and/or Single Network Slice Selection Assistance Information (S-NSSAI); UE- and/or PDU-Session details; and/or Network Instance details.

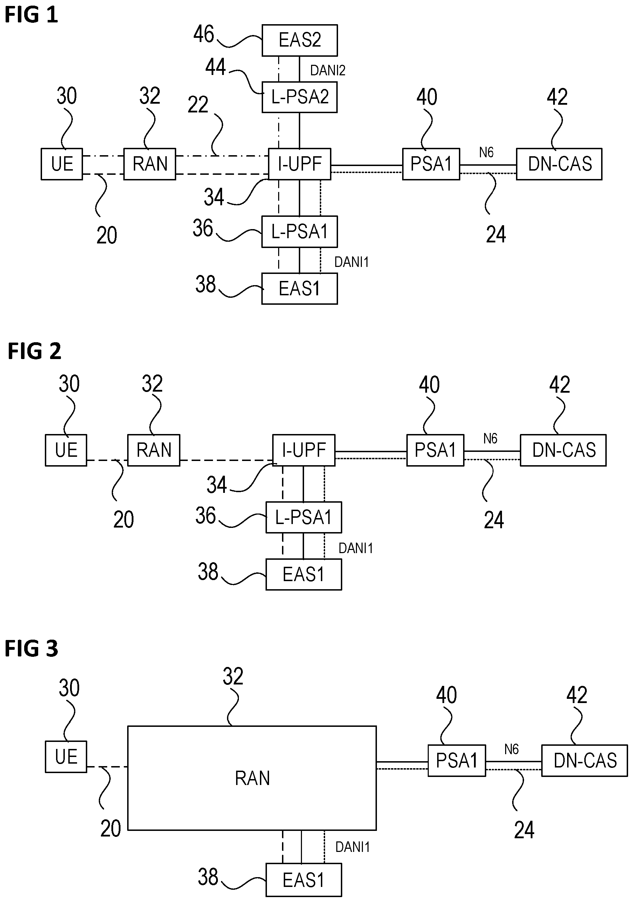

**Fig. 1** shows a first network scenario according to an embodiment illustrating architecture assumptions of the network. A user terminal (UE) 30 may connect to multiple EAS, in particular EAS1 38 and EAS2 46. For example, UE 30 may connect to EAS1 38 via a first connection 20 over a Radio Access Network (RAN) 32, a local UPF (l-UPF) 34, and a first local PSA (L-PSA1). Further, UE 30 may connect to EAS2 46 via a second connection 22 over the RAN 32, the l-UPF 34, and a second local PSA (L-PSA2) 44. EAS1 38 may be addressed by a first Data Network (DN) Access Identifier (DNAI) (DANI1) and/or EAS2 46 may be addressed by a second DNAI (DANI2). During the operation one of the EAS, e.g. EAS 1 38 may need to send or get the traffic to/from CAS, e.g. from DN-CAS 42, wherein data traffic to/from CAS can transferred per PDU session, per group UEs, per Network Instance, per Network Slice, per N6 interface, or per Data Network (DN) Access Identifier (DNAI). For example, EAS1 38 may establish a third connection 24 to DN-CAS 42 via L-PSA1, l-UPF 34, and a PSA, e.g. a central PSA, e.g. PSA1 40, wherein the connection between PSA1 40 and DN-CAS 42 may be realized via a N6 interface (N6). The third connection 24 may be transparent to the UE. The l-UPF 34 and/or the PSAs 36, 40, 44 may have to differentiate UL/DL traffic (Uplink/Downlink) between UE traffic, CAS traffic and/or EAS traffic. l-UPF 34, L-PSA1 36, L-PSA2 44, and PSA1, e.g. central PSA1, may be part of a core network, e.g. the core network of 5G. An embodiment of a possible message sequence diagram for establishing a connection between EAS and CAS, e.g. between EAS 1 38 and DN-CAS 42, in the network architecture according to figure 1 is explained below.

**Fig. 2** shows a second network scenario according to an embodiment illustrating architecture assumptions of the network, wherein the network architecture according to figure 2 corresponds to the network architecture according to figure 1 except for L-PSA2 44 and EAS2 46, which are not shown in figure 2. In this scenario, UE 30 may initially be connected to DN-CAS 42, which may determine during operation to include EAS 1 for offloading some processing tasks. An embodiment of a possible message sequence diagram for establishing a connection between EAS1 38 and DN-CAS 42 in the network architecture according to figure 2 is explained below.

**Fig. 3** shows a third network scenario according to an embodiment illustrating architecture assumptions of the network, wherein the network architecture according to figure 3 corresponds to the network architecture according to figure 2 except for L-PSA1 36 and l-UPF 34 being integrated in RAN 32. An embodiment of a possible message sequence diagram for establishing a connection between EAS1 38 and DN-CAS 42 in the network architecture according to figure 3 is explained below.

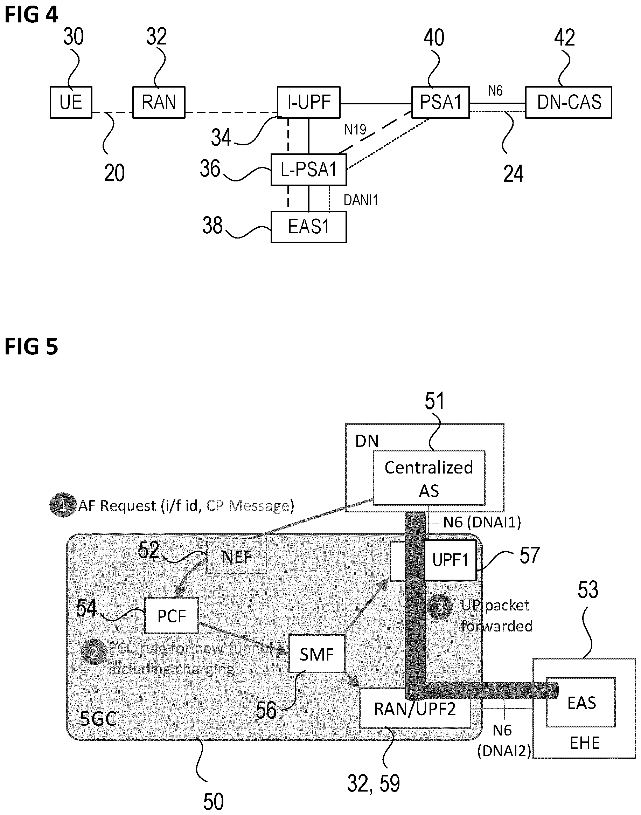

**Fig. 4** shows a fourth network scenario according to an embodiment illustrating architecture assumptions of the network, wherein the network architecture according to figure 4 corresponds to the network architecture according to figure 2 except for the third connection 24 directly connecting L-PSA1 36 with central PSA, e.g. PSA1 40. An embodiment of a possible message sequence diagram for establishing a connection between EAS1 38 and DN-CAS 42 in the network architecture according to figure 4 is explained below.

**Fig. 5** shows a fifth network scenario according to an embodiment illustrating architecture assumptions of the network, wherein according to the network architecture according to figure 5 centralized AS 51, which is located in a data network (DN) may send a message to a PCF 54, optionally via a NEF 52, in a first step (1). The message includes a request, in particular an AF request, for establishing a connection between centralized AS 51 and an EAS 53. The message may be a Control Plane (CP) message. The PCF 54 may include PCC rules for a new tunnel, optionally including charging information, into the message and may forward the corresponding extended message to a SMF 56, in a second step (2). Afterwards, the SMF 56 establishes a connection between a first UPF (UPF1) 57 and centralized AS 51, e.g. via a N6 interface and/or using DNAI1, another connection between RAN 32 and/or a second UPF (UPF2) 59 and EAS 53, e.g. via another N6 interface and/or using DNAI2, and finally between UPF1 57 and RAN 32 and/or, respectively, UPF2 59. Then a User Plane (UP) packet may be forwarded from UPF1 57 to RAN 32 and/or, respectively, UPF2 59, and/or vice versa, in a third step (3).

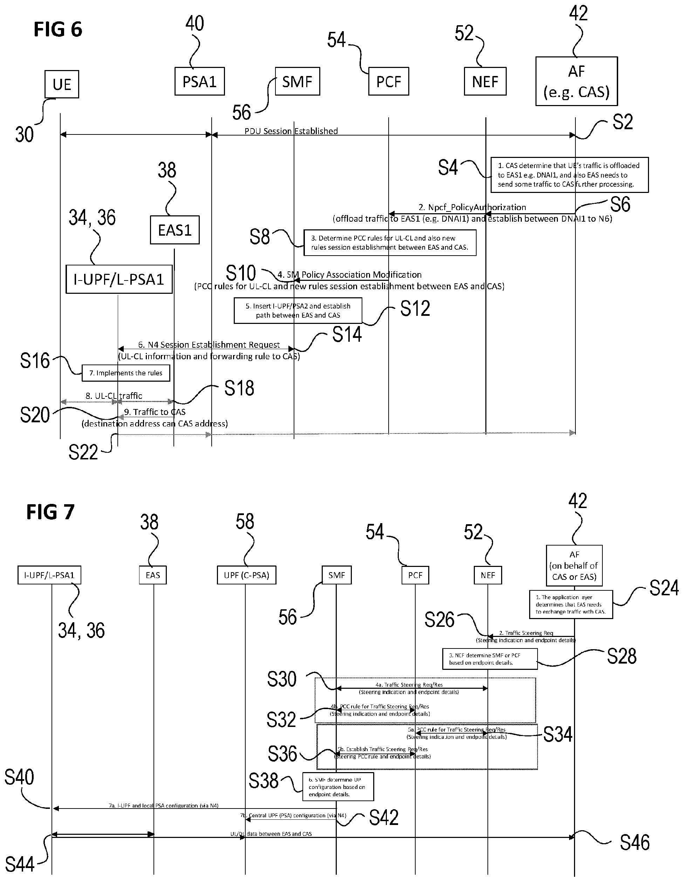

**Fig. 6** shows a first message sequence diagram in accordance with one embodiment. The message flow in accordance with the first message sequence diagramm may be used in one or more of the network scenarios explained above.

In a first stage S2, a PDU session between UE 30 and an AF, e.g. an AF at CAS 42, may be established, e.g. via PSA1 40.

In a second stage S4, CAS, e.g. DN-CAS 42, may determine that UE's traffic should be offloaded to EAS1 38 by using e.g. DNAI1. Alternatively or additionally, EAS1 38 may need to send some traffic to CAS for further processing.

In a third stage S6, AF sends a corresponding request to establish a session between EAS 1 38 and CAS to NEF 52. The message may include the addresses of EAS 1 38 and/or CAS, DNAI information regarding EAS1 38 and/or CAS, an UE address (e.g. GPSI), if it is associated with the PDU Session, a DNN and/or S-NSSAI, e.g. to identify a proper N6 interface, and/or Network Instance details. Further, NEF 52 may forward the message to PCF 54, optionally be including some policy authorization, e.g. by including Npcf_Policy Authorization.

In a fourth stage S8, PCF 54 determines PCC rules for UL-CL (Uplink-Classifier) and also new rules for a session establishment between EAS1 38 and CAS in order to route traffic between EAS1 38 and CAS.

In a fifth stage 510, PCF 54 forwards the modified message to SMF 56. The modified message may include Session Management (SM) Policy Association Modification, PCC rules for UL-CL, and/or new rules for the session establishment between EAS1 38 and CAS.

In a sixth stage S12, SMF may select l-UPF 34 and L-PSA 36 based on the DNAI, S-NSSAI or Network Instance details. SMF 56 may insert the proper I-UPF and/or L-PSA into the message and may establish a path between EAS1 38 and CAS. It is to be noted that one or more UPFs, an I-UPF or a PSA may be provided as an alternative to the L-PSA.

In a seventh stage S14, SMF 56 may send a session establishment request, e.g. a N4 Session Establishment Request, to l-UPF 34 and/or L-PSA1 36. The request may include UL-CL information and/or one or more forwarding rules to CAS. In other words, SMF 56 may forward UL-CL rules and CAS routing rules to I-UPF 34 and L-PSA1 36. Such routing rules may rule that, if traffic coming EAS1 38 with the destination CAS address, then forward the traffic to PSA1 40 or Network Instance X or Slice Session Y, etc. Similarly, regarding downlink traffic from CAS to EAS 1 38, PSA1 38 may perform similar actions.

In an eighth stage S16, l-UPF 34 and/or, respectively, L-PSA1 36 may implement the corresponding rules.

In a ninth stage S18, l-UPF 34 and/or, respectively, L-PSA1 36 may send UL-CL traffic to UE 30 and/or to EAS1 38.

In a tenth stage S20, EAS1 38 may send data traffic for CAS to l-UPF 34 and/or, respectively, L-PSA1 36, wherein the destination address may be the CAS address.

In an eleventh stage S22, l-UPF 34 and/or, respectively, L-PSA1 36 may forward the data traffic to the CAS, in particular to the AF of CAS, optionally via PSA1 40.

**Fig. 7** shows a second message sequence diagram in accordance with one embodiment. The message flow in accordance with the second message sequence diagramm may be used in one or more of the network scenarios explained above. In the second message sequence diagram it is assumed that a PDU session between UE 30 and an AF, e.g. an AF at CAS, e.g. DN-CAS 42, or at an EAS, e.g. EAS1 38 or EAS2 46 is already established.

In a twelfth stage S24, AF, e.g. in the application layer, may determine that EAS needs to exchange traffic with CAS.

In a thirteenth stage S26, AF sends a corresponding request to establish a session between EAS and CAS to NEF 52. The Steering Request may include a "Steering Indication" and/or local and/or endpoint details (e.g. EAS and CAS IP addresses, AF-Service-ID, EAS geographical area information, edge DNAI, central DNAI, etc.). The Steering Request may be implemented as extension of an existing API operation (e.g. Nnef_TrafficInfluence) by introducing a corresponding new message. The steering may be used for establishing the communication path between EAS and CAS. In addition, the steering may be used for the information what traffic and/or applications are linked to this newly established path.

In a fourteenth stage S28, NEF 52 may determine SMF 56 or PCF 54 based on local configuration and/or steering information (e.g. EAS and CAS IP addresses and/or EAS geographical area information). Then, the message flow may proceed as explained in stages S30 and S32, or, alternatively, as explained in stages S34 and S36.

In a fifteenth stage S30, NEF 52 may send the traffic Steering Request, e.g. including a steering indication and endpoint details, to SMF 56.

In a sixteenth stage S32, SMF 56 may exchange PCC rules for the traffic Steering Request with PCF 54, wherein the Steering Request may include steering indication and endpoint details. In other words, SMF 56 and PCF 54 coordinate to determine PCC rules for the requested communication flow.

Alternatively, in a seventeenth stage S34, NEF 52 may send PCC the traffic Steering Request to PCF 52, wherein the Steering Request may include a steering indication and/or endpoint details.

In an eighteenth stage S36, PCF 54 may establish the traffic Steering Request, which may include steering PCC rules and/or endpoint details with SMF 56. In other words, SMF 56 and PCF 54 coordinate to determine PCC rules for the requested communication flow.

In a nineteenth stage S38, SMF 56 may determine an User Plane (UP) configuration based on endpoint details. For example, SMF 56 may select the l-UPF(s) and local PSA(s) based on the steering information, e.g. based on local endpoint details, and may select the central UPF (PSA) based on central endpoint details.

In a twentieth stage S40, SMF 56 may send a l-UPF and local PSA configuration, e.g. via a N4 interface, to l-UPF/L-PSA1 34, 36.

In a twenty-first stage S42, SMF 56 may send a central UPF (PSA) configuration, e.g. via a N4 interface, to UPF (C-PSA) 58.

In other words, in stages S40 and S42, SMF 56 configures the User Plane Functions (local and central) in order to perform the required traffic forwarding. It is noted, that in the above message sequence diagramm the tunnel exists only between I-UPF/L-PSA1 34, 36 and C-PSA 58. However, alternatively it is possible that SMF 56 may establish a tunnel between RAN, e.g. RAN 32 and C-PSA (central PSA). For example, EAS 38 is running inside a RAN node of RAN and SMF 56 establishes the tunnel between EAS 38, RAN 32 and C-PSA 58. For instance, the RAN node may act as an I-UPF.

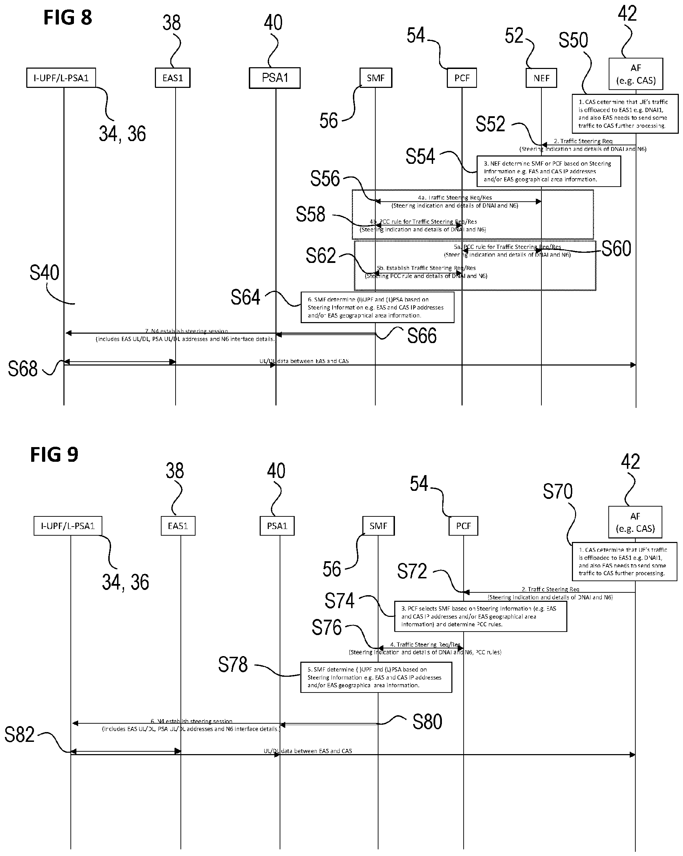

**Fig. 8** shows a third message sequence diagram in accordance with one embodiment. The message flow in accordance with the third message sequence diagramm may be used in one or more of the network scenarios explained above. In the third message sequence diagram it is assumed that a PDU session between UE 30 and an AF, e.g. an AF at CAS, e.g. DN-CAS 42, or at an EAS, e.g. EAS1 38 or EAS2 46 is already established. The third message sequence diagram according to figure 8 widely corresponds to the message sequence diagram according to figure 7.

In a twenty-second stage S50, CAS may determine that UE's traffic should be offloaded to EAS, in particular EAS1, e.g. by using DNAI1. Further, EAS1 may need to send some data traffic to CAS for further processing.

In a twenty-third stage S52, AF may send a Steering Request, optionally with a steering indication, DNAI, and/or EAS 1, N6 and/or CAS details (e.g. EAS and CAS IP addresses, EAS1 geographical area information, etc.) to NEF 52. If the AF sends this steering information along with another message (e.g. for insertion of UL-CL), then the AF may include the steering indication so that NF, in particular 5GC NF, can know that a session needs to be established between EAS 1 and CAS. Steering Information may be provided as a new Information Element (IE) in the messages.

In a twenty-fourth stage S54, NEF 52 may determine SMF 56 or PCF 54 based on local configuration and/or Steering Information (e.g. and CAS IP addresses and/or geographical area information). Then, the message flow may proceed as explained in stages S56 and S58, or, alternatively, as explained in stages S60 and S62.

In a twenty-fifth stage S56, NEF 52 may send the traffic Steering Request including e.g. the steering indication and/or details of the corresponding DNAI and/or N6 to SMF 56.

In a twenty-sixth stage S58, SMF 56 may exchange PCC rules for the traffic Steering Request with PCF 54, wherein the Steering Request may include steering indication and/or details regarding the corresponding DNAI and/or N6. In other words, SMF 56 and PCF 54 may coordinate to determine PCC rules for the communication between and CAS.

In a twenty-seventh stage S60, NEF 52 may may send PCC rules for the traffic Steering Request to PCF 52, wherein the Steering Request may include a steering indication and/or details regarding the corresponding DNAI and/or N6.

In a twenty-eighth stage S62, PCF 54 may establish the traffic Steering Request, which may include steering PCC rules and/or details regarding the corresponding DNAI and/or N6 with SMF 56. In other words, SMF 56 and PCF 54 may coordinate to determine PCC rules for the communication between EAS 1 and CAS.

In a twenty-ninth stage S64, SMF 56 may determine l-UPF 34 and/or L-1PSA 36 based on the Steering Information, e.g. EAS 1 and CAS IP addresses and/or EAS 1 geographical area information.

In a thirtieth stage S66, SMF 56 may forward FAR (Forwarding Action Rule) and/or PDR (Packet Detection Rule) which may include EAS1 and CAS addresses, to 1-UPF 34 and L-PSA 36. SMF 56 may also provide Network Instance details, e.g. for N3 and N6, to l-UPF 34 and L-PSA 36. Further, SMF 56 may establish a N4 steering session including EAS UL/DL, PSA UL/DL addresses and/or N6 interface details with l-UPF/L-PSA1 34, 36.

In a thirty-first stage S68, EAS1 38 and CAS 42 may exchange UL/DL data via 1-UPF 34 and/or L-PSA1 36 and via PSA1 40.

**Fig. 9** shows a fourth message sequence diagram in accordance with one embodiment. The message flow in accordance with the fourth message sequence diagramm may be used in one or more of the network scenarios explained above. In the fourth message sequence diagram it is assumed that a PDU session between UE 30 and an AF, e.g. an AF at CAS, e.g. DN-CAS 42, or at an EAS, e.g. EAS1 38 or EAS2 46 is already established.

In a thirty-second stage S70, CAS 42 may determine that UE's traffic should be offloaded to EAS1, e.g. having DNAI1. Alternatively or additionaly, EAS 1 38 may need to send some traffic to CAS 42 further processing.

In a thirty-third stage S72, CAS 42 may send a traffic Steering Request, optionally including the steering indication, details of the corresponding DNAI, N6, and CAS details (e.g. EAS and CAS IP addresses, EAS geographical area information, etc.,) to PCF 54. AF may perform PCF selection based on EAS geographical area information. If AF sends this steering information along with another message (e.g. for insertion of UL-CL), then AF may include the steering indication so that NF, in particular 5GC NF, may know that a session may need to be established between and CAS. The Steering Information may be provided as a new Information Element (IE) in the messages.

In a thirty-fourth stage S74, PCF 54 may select SMF 56 based on local configuration and/or Steering Information (e.g. EAS and CAS IP addresses and/or EAS geographical area information) and may determine PCC rules for steering.

In a thirty-fifth stage S76, PCF 54 may send the Steering Request to the selected SMF 56 along with Steering Information and PCC rules.

In a thirty-sixth stage S78, SMF 56 may determine l-UPF 34 and L-PSA1 36 based on the Steering Information, e.g. EAS and CAS IP addresses and/or EAS geographical area information.

In a thirty-seventh stage S80, SMF 56 may forward FAR and/or PDR to l-UPF 34 and/or L-PSA 36, optinally including EAS 1 and CAS addresses. SMF 56 may also provide Network Instance details e.g. for N3 and N6. SMF 56 may establish a N4 steering session including EAS UL/DL, PSA UL/DL addresses and N6 interface details with l-UPF 34 and/or L-PSA 36.

In a thirty-eighth stage S82, EAS1 38 and CAS 42 may exchange UL/DL data via l-UPF 34 and/or L-PSA1 36 and via PSA1 40.

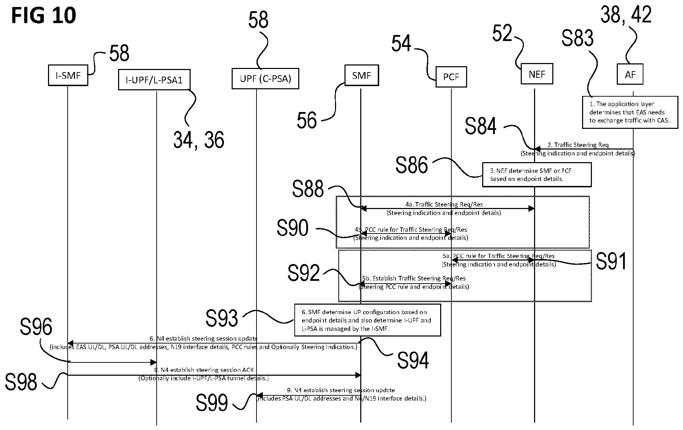

**Fig. 10** shows a fifth message sequence diagram in accordance with one embodiment. The message flow in accordance with the fifth message sequence diagramm may be used in one or more of the network scenarios explained above. In the fifth message sequence diagram it is assumed that a PDU session between UE 30 and an AF, e.g. an AF at CAS, e.g. DN-CAS 42, or at an EAS, e.g. EAS1 38 or EAS2 46 is already established. According to figure 10 multiple SMFs may be involved in providing the tunnel between the corresponding CAS and EAS. In this case, l-SMF 58 may manage the l-UPF 34 and/or L-PSA 36, and SMF 56 may manage the PSA, in particular the central PSA C-PSA.

In a thirty-ninth stage S83, the AF in the application layer may determine that the corresponding EAS needs to exchange traffic with the corresponding CAS.

In a fourtieth stage S84, AF may send a traffic Steering Request including the Steering Indication and/or endpoint details to NEF 52.

In a fourty-first stage S86, NEF 52 may determine SMF 56 or PCF 54 based on the endpoint details. Then the message flow may proceed with stages S88 and S90, or, alternatively, with stages S91 and S92.

In a fourty-second stage S88, NEF 52 may send the traffic Steering Request optionally including the steering indication and/or endpoint details to SMF 56.

In a fourty-third stage S90, SMF 56 may exchange PCC rules for the traffic Steering Request with PCF 54, wherein the Steering Request may include steering indication and endpoint details. In other words, SMF 56 and PCF 54 coordinate to determine PCC rules for the requested communication flow.

In a fourty-fourth stage S91, NEF 52 may send PCC rules for the traffic Steering Request to PCF 52, wherein the Steering Request may include a steering indication and/or endpoint details.

In a fourty-fifth stage S92, PCF 54 may establish the traffic Steering Request, which may include steering PCC rules and/or endpoint details with SMF 56. In other words, SMF 56 and PCF 54 coordinate to determine PCC rules for the requested communication flow.

In a fourty-sixth stage S93, SMF 56 may determine a UP configuration based on the endpoint details and also may determine that 1-UPF 34 and L-PSA 36 are managed by I-SMF 58.

In a fourty-seventh stage S94, SMF 56 may send a N4 establish steering session update to I-SMF 58 including EAS UL/DL, PSA UL/DL addresses, N19 interface details, PCC rules and/or steering indication.

In a fourty-eighth stage S96, I-SMF 58 may send 1-UPF and local PSA configuration, optionally via N4, to l-UPF/L-PSA1 34, 36.

In a fourty-ninth stage S98, I-SMF 58 may send a N4 establish steering session ACK, optionally including I-UPF/L-PSA tunnel details, to SMF 56. In a fiftieth stage S99, SMF 56 may send a N4 establish steering session update, optionally including PSA UL/DL addresses and/or N6/N19 interface details, to UPF(C-PSA) 58.

## Claims

1. A Session Management Function, SMF, (56) of a mobile radio communication network, comprising one or more processors configured to:
receive a steering request message (S10) via a Network Exposure Function, NEF, (52) and/or Policy Control Function, PCF, the steering request message (S10) requesting to establish a communication connection (S20, S22) between a first Application Function, AF, (42) and a second AF (38), for steering the traffic of a Protocol Data Unit, PDU, session between a User Equipment, UE, (30) and the first AF (42) to the second AF (38), wherein the first AF (42) and the second AF (38) are located outside the mobile radio communication network, the steering request message (S10) comprising a first information allowing the determination of a first interface associated with a first network in which the first AF (42) is located, a second information allowing the determination of a second interface associated with a second network in which the second AF (38) is located, and an address of the UE (30);
establish the communication connection between the first AF (42) and the second AF (38) through the mobile radio communication network and via the first interface and via the second interface using the first information and/or the second information;
wherein the first information of the steering request message (S10) comprises a Data Network Access Identifier, DNAI, of a first User Plane Function associated with the first network; and/or
wherein the second information of the steering request message (S10) comprises a DNAI of a second User Plane Function associated with the second network; and/or
wherein the first information of the steering request message (S10) comprises a first AF Service identifier, ID, of the first AF (42); and/or
wherein the second information of the steering request message (S10) comprises a second AF Service ID of the second AF.

2. The SMF of claim 1,
wherein the network is a 5G Core Network.

3. An Application Function, AF, (42), comprising one or more processors configured to
generate a steering request message (S10), the steering request message (S10) requesting to establish a communication connection (S20, S22) between the Application Function, AF, (42) and a second AF (38), for steering the traffic of a Protocol Data Unit, PDU, session between a User Equipment, UE (30), and the AF to the second AF, wherein the AF (42) is connected to the UE (30) and wherein the AF (42) and the second AF (38) are located outside a mobile radio communication network in which a Session Management Function, SMF, (56) is located, the steering request message (S10) comprising a first information allowing the determination of a first interface associated with a first network in which the AF (42) is located, a second information allowing the determination of a second interface associated with a second network in which the second AF (38) is located, and an address of the UE (30);
send the steering request message (S10) via a Network Exposure Function, NEF, (52) and/or Policy Control Function, PCF, to the SMF (56),
wherein a corresponding Uplink-Classifier, UL-CL, traffic is send to the UE (30);
wherein the first information of the steering request message (S10) comprises a Data Network Access Identifier, DNAI, of a first User Plane Function associated with the first network; and/or
wherein the second information of the steering request message (S10) comprises a DNAI of a second User Plane Function associated with the second network;
and/or
wherein the first information of the steering request message (S10) comprises a first AF Service identifier, ID, of the AF (42); and/or
wherein the second information of the steering request message (S10) comprises a second AF Service ID of the second AF (38).

4. The AF of claim 3,
wherein the network is a 5G Core Network.

5. A method of operating a Session Management Function, SMF, (56) of a mobile radio communication network, the method comprising:
providing a Session Management Function, SMF, (56);
receiving a steering request message (S10) via a Network Exposure Function, NEF, (52) and/or Policy Control Function, PCF, the steering request message (S10) requesting to establish a communication connection (S20, S22) between a first Application Function, AF, (42) and a second AF (38), for steering the traffic of a Protocol Data Unit, PDU, session between a User Equipment, UE, (30) and the first AF (42) to the second AF (38), wherein the first AF (42) and the second AF (38) are located outside the mobile radio communication network, the steering request message (S10) comprising a first information allowing the determination of a first interface associated with a first network in which the first AF (42) is located, a second information allowing the determination of a second interface associated with a second network in which the second AF (38) is located, and an address of the UE (30);
establishing the communication connection between the first AF (42) and the second AF (38) through the mobile radio communication network and via the first interface and via the second interface using the first information and/or the second information;
wherein the first information of the steering request message (S10) comprises a Data Network Access Identifier, DNAI, of a first User Plane Function associated with the first network; and/or
wherein the second information of the steering request message (S10) comprises a DNAI of a second User Plane Function associated with the second network; and/or
wherein the first information of the steering request message (S10) comprises a first AF Service identifier, ID, of the first AF (42); and/or
wherein the second information of the steering request message (S10) comprises a second AF (38) Service ID of the second AF (38).

6. The method of claim 5,
wherein the network is a 5G Core Network.

7. A method of operating an Application Function, AF, (42) the method comprising:
providing the AF (42);
generating a steering request message (S10), the steering request message (S10) requesting to establish a communication connection (S20, S22) between the AF (42) and a second AF (38), for steering the traffic of a Protocol Data Unit, PDU, session between a User Equipment, UE (30), and the AF to the second AF, wherein the AF (42) is connected to the UE (30), and wherein the AF (42) and the second AF (38) are located outside a mobile radio communication network in which a Session Management Function, SMF, (56) is located, the steering request message (S10) comprising a first information allowing the determination of a first interface associated with a first network in which the AF (42) is located, a second information allowing the determination of a second interface associated with a second network in which the second AF (38) is located, and an address of the UE (30);
sending the steering request message (S10) via a Network Exposure Function, NEF, and/or Policy Control Function, PCF, to the SMF,
sending a corresponding Uplink-Classifier, UL-CL, traffic to the UE (30);
wherein the first information of the steering request message (S10) comprises a Data Network Access Identifier, DNAI, of a first User Plane Function associated with the first network; and/or
wherein the second information of the steering request message (S10) comprises a DNAI of a second User Plane Function associated with the second network; and/or
wherein the first information of the steering request message (S10) comprises a first AF Service identifier, ID, of the AF (42); and/or
wherein the second information of the steering request message (S10) comprises a second AF Service ID of the second AF (38).

8. The method of claim 7,
wherein the network is a 5G Core Network.

9. A non-transient computer-readable storage medium storing instruction, when executed by a processor, implementing a method of operating a Session Management Function of a mobile radio communication network of claim 5 or 6.

10. A non-transient computer-readable storage medium storing instruction, when executed by a processor, implementing a method of operating an Application Function of a mobile radio communication network of claim 7 or 8.

## Patentansprüche

1. Eine Sitzungsmanagementfunktion, SMF, (56) eines Mobilfunkkommunikationsnetzes, die einen oder mehrere Prozessoren aufweist, die eingerichtet sind zum:
Empfangen einer Lenkungsanforderungsnachricht (S10) über eine Netzwerkexponierfunktion, NEF, (52) und/oder Regelkontrollfunktion, PCF, wobei die Lenkungsanforderungsnachricht (S10) den Aufbau einer Kommunikationsverbindung (S20, S22) zwischen einer ersten Anwendungsfunktion, AF, (42) und einer zweiten AF (38) anfordert, um den Verkehr einer Protokolldateneinheit, PDU,-Sitzung zwischen einem Benutzergerät, UE, (30) und der ersten AF (42) zur zweiten AF (38) zu lenken, wobei die erste AF (42) und die zweite AF (38) sich außerhalb des Mobilfunkkommunikationsnetzes befinden, wobei die Lenkungsanforderungsnachricht (S10) eine erste Information, die die Bestimmung einer ersten Schnittstelle ermöglicht, die mit einem ersten Netz assoziiert ist, in dem sich die erste AF (42) befindet, eine zweite Information, die die Bestimmung einer zweiten Schnittstelle ermöglicht, die mit einem zweiten Netz assoziiert ist, in dem sich die zweite AF (38) befindet, und eine Adresse des UE (30) aufweist;
Herstellen der Kommunikationsverbindung zwischen der ersten AF (42) und der zweiten AF (38) über das Mobilfunknetz und über die erste Schnittstelle und über die zweite Schnittstelle unter Verwendung der ersten Information und/oder der zweiten Information;
wobei die erste Information der Lenkungsanforderungsnachricht (S10) einen Datennetzwerkzugriffsidentifikator, DNAI, einer ersten mit dem ersten Netz assoziierten Benutzerebenenfunktion aufweist; und/oder
wobei die zweite Information der Lenkungsanforderungsnachricht (S10) einen DNAI einer zweiten Benutzerebenenfunktion aufweist, die mit dem zweiten Netz assoziiert ist; und/oder wobei die erste Information der Lenkanforderungsnachricht (S10) eine ersten AF-Dienstidentifikation, ID, des ersten AF (42) aufweist; und/oder
wobei die zweite Information der Lenkanforderungsnachricht (S10) eine zweite AF-Dienst-ID des zweiten AF aufweist.

2. Die SMF nach Anspruch 1,
wobei das Netz ein 5G-Kemnetz ist.

3. Eine Anwendungsfunktion, AF, (42), die einen oder mehrere Prozessoren aufweist, die eingerichtet sind zum:
Erzeugen einer Lenkungsanforderungsnachricht (S10), wobei die Lenkungsanforderungsnachricht (S10) den Aufbau einer Kommunikationsverbindung (S20, S22) zwischen der Anwendungsfunktion, AF, (42) und einer zweiten AF (38) anfordert, um den Verkehr einer Protokolldateneinheit, PDU,-Sitzung zwischen einem Benutzergerät, UE (30), und der AF zu der zweiten AF zu lenken, wobei die AF (42) mit dem UE (30) verbunden ist und wobei sich die AF (42) und die zweite AF (38) außerhalb eines Mobilfunkkommunikationsnetzes befinden, in dem sich eine Sitzungsmanagementfunktion, SMF, (56) befindet, wobei die Lenkungsanforderungsnachricht (S10) eine erste Information, die die Bestimmung einer ersten Schnittstelle ermöglicht, die mit einem ersten Netz assoziiert ist, in dem sich die AF (42) befindet, eine zweite Information, die die Bestimmung einer zweiten Schnittstelle ermöglicht, die mit einem zweiten Netz assoziiert ist, in dem sich die zweite AF (38) befindet, und eine Adresse des UE (30) aufweist;
Senden der Lenkanforderungsnachricht (S10) über eine Netzwerkexponierfunktion, NEF, (52) und/oder Regelkontrollfunktion, PCF, an die SMF (56),
wobei ein entsprechender Aufwärtsstrecken-Klassifizierer, UL-CL,-Verkehr an das UE (30) gesendet wird;
wobei die erste Information der Lenkungsanforderungsnachricht (S10) einen Datennetzwerkzugriffsidentifikator, DNAI, einer ersten mit dem ersten Netz assoziierten Benutzerebenenfunktion aufweist; und/oder
wobei die zweite Information der Lenkungsanforderungsnachricht (S10) einen DNAI einer zweiten Benutzerebenenfunktion aufweist, die mit dem zweiten Netz assoziiert ist; und/oder
wobei die erste Information der Lenkanforderungsnachricht (S10) eine erste AF-Dienstidentifikation, ID, des AF (42) aufweist; und/oder
wobei die zweite Information der Lenkanforderungsnachricht (S10) eine zweite AF-Dienstidentifikation der zweiten AF (38) aufweist.

4. Die AF nach Anspruch 3,
wobei das Netz ein 5G-Kemnetz ist.

5. Ein Verfahren zum Betreiben einer Sitzungsmanagementfunktion, SMF, (56) eines Mobilfunkkommunikationsnetzes, wobei das Verfahren aufweist:
Bereitstellung einer Sitzungsmanagementfunktion (SMF) (56);
Empfangen einer Lenkungsanforderungsnachricht (S10) über eine Netzwerkexponierfunktion, NEF, (52) und/oder Regelkontrollfunktion, PCF, wobei die Lenkungsanforderungsnachricht (S10) den Aufbau einer Kommunikationsverbindung (S20, S22) zwischen einer ersten Anwendungsfunktion, AF, (42) und einer zweiten AF (38) anfordert, um den Verkehr einer Protokolldateneinheit, PDU,-Sitzung zwischen einem Benutzergerät, UE, (30) und der ersten AF (42) zur zweiten AF (38) zu steuern, wobei sich die erste AF (42) und die zweite AF (38) außerhalb des Mobilfunkkommunikationsnetzes befinden, wobei die Lenkungsanforderungsnachricht (S10) eine erste Information, die die Bestimmung einer ersten Schnittstelle ermöglicht, die mit einem ersten Netz assoziiert ist, in dem sich die erste AF (42) befindet, eine zweite Information, die die Bestimmung einer zweiten Schnittstelle ermöglicht, die mit einem zweiten Netz assoziiert ist, in dem sich die zweite AF (38) befindet, und eine Adresse des UE (30) aufweist;
Herstellen der Kommunikationsverbindung zwischen der ersten AF (42) und der zweiten AF (38) über das Mobilfunknetz und über die erste Schnittstelle und über die zweite Schnittstelle unter Verwendung der ersten Information und/oder der zweiten Information;
wobei die erste Information der Lenkungsanforderungsnachricht (S10) einen Datennetzwerkzugriffsidentifikator, DNAI, einer ersten mit dem ersten Netz assoziierten Benutzerebenenfunktion aufweist; und/oder
wobei die zweite Information der Lenkungsanforderungsnachricht (S10) einen DNAI einer zweiten Benutzerebenenfunktion aufweist, die mit dem zweiten Netz assoziiert ist; und/oder
wobei die erste Information der Lenkanforderungsnachricht (S10) eine erste AF-Dienstidentifikation, ID, des ersten AF (42) aufweist; und/oder
wobei die zweite Information der Lenkanforderungsnachricht (S10) eine zweite AF (38)-Dienst-ID der zweiten AF (38) aufweist.

6. Das Verfahren nach Anspruch 5,
wobei das Netz ein 5G-Kemnetz ist.

7. Ein Verfahren zum Betreiben einer Anwendungsfunktion, AF, (42), wobei das Verfahren aufweist:
Bereitstellen der AF (42);
Erzeugen einer Lenkungsanforderungsnachricht (S10), wobei die Lenkungsanforderungsnachricht (S10) den Aufbau einer Kommunikationsverbindung (S20, S22) zwischen der AF (42) und einer zweiten AF (38) anfordert, um den Verkehr einer Protokolldateneinheit, PDU, Sitzung zwischen einem Benutzergerät, UE (30), und der AF zu der zweiten AF zu lenken, wobei die AF (42) mit dem UE (30) verbunden ist, und wobei sich die AF (42) und die zweite AF (38) außerhalb eines Mobilfunkkommunikationsnetzes befinden, in dem sich eine Sitzungsmanagementfunktion SMF, (56) befindet, wobei die Lenkungsanforderungsnachricht (S10) eine erste Information, die die Bestimmung einer ersten Schnittstelle ermöglicht, die mit einem ersten Netz assoziiert ist, in dem sich die AF (42) befindet, eine zweite Information, die die Bestimmung einer zweiten Schnittstelle ermöglicht, die mit einem zweiten Netz assoziiert ist, in dem sich die zweite AF (38) befindet, und eine Adresse des UE (30) aufweist;
Senden der Lenkanforderungsnachricht (S10) über eine Netzwerkexponierfunktion, NEF, und/oder Regelkontrollfunktion, PCF, an die SMF,
Senden eines entsprechenden Aufwärtsstrecken-Klassifizierer, UL-CL,-Verkehrs an das UE (30);
wobei die erste Information der Lenkungsanforderungsnachricht (S10) einen Datennetzwerkzugriffsidentifikator, DNAI, einer ersten mit dem ersten Netz assoziierten Benutzerebenenfunktion aufweist; und/oder
wobei die zweite Information der Lenkungsanforderungsnachricht (S10) einen DNAI einer zweiten Benutzerebenenfunktion aufweist, die mit dem zweiten Netz assoziiert ist; und/oder
wobei die erste Information der Lenkanforderungsnachricht (S10) eine erste AF-Dienstidentifikation, ID, des AF (42) aufweist; und/oder
wobei die zweite Information der Lenkanforderungsnachricht (S10) eine zweite AF-Dienstidentifikation der zweiten AF (38) aufweist.

8. Das Verfahren nach Anspruch 7,
wobei das Netz ein 5G-Kemnetz ist.

9. Ein nicht-flüchtiges computerlesbares Speichermedium, das Befehle speichert, die, wenn sie von einem Prozessor ausgeführt werden, ein Verfahren zum Betreiben einer Sitzungsmanagementfunktion eines Mobilfunkkommunikationsnetzes nach Anspruch 5 oder 6 implementieren.

10. Ein nicht-flüchtiges computerlesbares Speichermedium, das Befehle speichert, die, wenn sie von einem Prozessor ausgeführt werden, ein Verfahren zum Betreiben einer Anwendungsfunktion eines Mobilfunkkommunikationsnetzes nach Anspruch 7 oder 8 implementieren.

## Revendications

1. Une fonction de gestion de session, SMF, (56) d'un réseau de radiocommunication mobile, comprenant un ou plusieurs processeurs configurés pour :
recevoir un message de demande de pilotage (S10) via une fonction d'exposition au réseau, NEF, (52) et/ou une fonction de contrôle des politiques, PCF, le message de demande de pilotage (S10) demandant d'établir une connexion de communication (S20, S22) entre une première fonction d'application, AF, (42) et une deuxième AF (38), pour piloter le trafic d'une session d'unité de données de protocole, PDU, entre un équipement utilisateur, UE, (30) et la première AF (42) vers la deuxième AF (38), où la première AF (42) et la deuxième AF (38) sont situées en dehors du réseau de radiocommunication mobile, le message de demande de pilotage (S10) comprenant une première information permettant de déterminer une première interface associée à un premier réseau dans lequel la première AF (42) est située, une deuxième information permettant de déterminer une deuxième interface associée à un deuxième réseau dans lequel la deuxième AF (38) est située, ainsi qu'une adresse de l'UE (30) ;
établir la connexion de communication entre la première AF (42) et la deuxième AF (38) à travers le réseau de radiocommunication mobile et via la première interface et via la deuxième interface en utilisant la première information et/ou la deuxième information ;
dans laquelle la première information du message de demande de pilotage (S10) comprend un identifiant d'accès au réseau de données, DNAI, d'une première fonction de plan d'utilisateur associée au premier réseau ; et/ou
dans laquelle la deuxième information du message de demande de pilotage (S10) comprend un DNAI d'une deuxième fonction de plan d'utilisateur associée au deuxième réseau ;
et/ou
dans laquelle la première information du message de demande de pilotage (S10) comprend un premier identifiant, ID, de service AF de la première AF (42) ; et/ou
dans laquelle la deuxième information du message de demande de pilotage (S10) comprend un deuxième ID de service AF de la deuxième AF.

2. La SMF selon la revendication 1,
dans laquelle le réseau est un réseau central 5G.

3. Une fonction d'application, AF, (42),
comprenant un ou plusieurs processeurs configurés pour :
générer un message de demande de pilotage (S10), le message de demande de pilotage (S10) demandant d'établir une connexion de communication (S20, S22) entre la fonction d'application, AF, (42) et une deuxième AF (38) pour piloter le trafic d'une session d'unité de données de protocole, PDU, entre un équipement utilisateur, UE, (30) et l'AF vers la deuxième AF, où l'AF (42) est connectée à l'UE (30) et où l'AF (42) et la deuxième AF (38) sont situées en dehors d'un réseau de radiocommunication mobile dans lequel une fonction de gestion de session, SMF, (56) est située, le message de demande de pilotage (S10) comprenant une première information permettant de déterminer une première interface associée à un premier réseau dans lequel l'AF (42) est située, une deuxième information permettant de déterminer une deuxième interface associée à un deuxième réseau dans lequel se trouve la deuxième AF (38), et une adresse de l'UE (30) ;
envoyer le message de demande de pilotage (S10) via une fonction d'exposition au réseau, NEF, (52) et/ou une fonction de contrôle des politiques, PCF, à la SMF (56),
dans laquelle un trafic de classificateur de liaison montante, UL-CL, correspondant est envoyé à l'UE (30) ;
dans laquelle la première information du message de demande de pilotage (S10) comprend un identifiant d'accès au réseau de données, DNAI, d'une première fonction de plan d'utilisateur associée au premier réseau ; et/ou
dans laquelle la deuxième information du message de demande de pilotage (S10) comprend un DNAI d'une deuxième fonction de plan d'utilisateur associée au deuxième réseau ; et/ou
dans laquelle la première information du message de demande de pilotage (S10) comprend un premier identifiant, ID, de service AF de l'AF (42) ; et/ou
dans laquelle la deuxième information du message de demande de pilotage (S10) comprend un deuxième ID de service AF de la deuxième AF (38).

4. L'AF selon la revendication 3,
dans laquelle le réseau est un réseau central 5G.

5. Un procédé d'actionnement d'une fonction de gestion de session, SMF, (56) d'un réseau de radiocommunication mobile, le procédé comprenant les étapes suivantes consistant à :
fournir une fonction de gestion de session, SMF, (56) ;
recevoir un message de demande de pilotage (S10) via une fonction d'exposition au réseau, NEF, (52) et/ou une fonction de contrôle des politiques, PCF, le message de demande de pilotage (S10) demandant d'établir une connexion de communication (S20, S22) entre une première fonction d'application, AF, (42) et une deuxième AF, 38, pour piloter le trafic d'une session d'unité de données de protocole, PDU, entre un équipement utilisateur, UE, (30) et la première AF (42) vers la deuxième AF (38), dans lequel la première AF (42) et la deuxième AF (38) sont situées en dehors du réseau de radiocommunication mobile, le message de demande de pilotage (S10) comprenant une première information permettant de déterminer une première interface associée à un premier réseau dans lequel la première AF (42) est située, une deuxième information permettant de déterminer une deuxième interface associée à un deuxième réseau dans lequel la deuxième AF (38) est située, et une adresse de l'UE (30) ;
établir la connexion de communication entre la première AF (42) et la deuxième AF (38) à travers le réseau de radiocommunication mobile et via la première interface et via la deuxième interface en utilisant la première information et/ou la deuxième information ;
dans lequel la première information du message de demande de pilotage (S10) comprend un identifiant d'accès au réseau de données, DNAI, d'une première fonction de plan d'utilisateur associée au premier réseau ; et/ou
dans lequel la deuxième information du message de demande de pilotage (S10) comprend un DNAI d'une deuxième fonction de plan d'utilisateur associée au deuxième réseau ;
et/ou
dans lequel la première information du message de demande de pilotage (S10) comprend un premier identifiant, ID, de service AF de la première AF (42) ; et/ou
dans lequel la deuxième information du message de demande de pilotage (S10) comprend un deuxième ID de service AF (38) de la deuxième AF (38).

6. Le procédé selon la revendication 5,
dans lequel le réseau est un réseau central 5G.

7. Un procédé d'actionnement d'une fonction d'application, AF, (42), le procédé comprenant les étapes suivantes consistant à :
fournir l'AF (42) ;
générer un message de demande de pilotage (S10), le message de demande de pilotage (S10) demandant d'établir une connexion de communication (S20, S22) entre l'AF (42) et une deuxième AF (38), pour piloter le trafic d'une session d'unité de données de protocole, PDU, entre un équipement utilisateur, UE, (30) et l'AF vers la deuxième AF,
dans lequel l'AF (42) est connectée à l'UE (30),
et dans lequel l'AF (42) et la deuxième AF (38) sont situées en dehors d'un réseau de radiocommunication mobile dans lequel une fonction de gestion de session, SMF, (56) est située, le message de demande de pilotage (S10) comprenant une première information permettant de déterminer une première interface associée à un premier réseau dans lequel l'AF (42) est située, une deuxième information permettant de déterminer une deuxième interface associée à un deuxième réseau dans lequel la deuxième AF (38) est située, et une adresse de l'UE (30) ;
envoyer le message de demande de pilotage (S10) via une fonction d'exposition au réseau, NEF, et/ou une fonction de contrôle des politiques, PCF, à la SMF,
envoyer un trafic de classificateur de liaison montante, UL-CL, correspondant à l'UE (30) ;
dans lequel la première information du message de demande de pilotage (S10) comprend un identifiant d'accès au réseau de données, DNAI, d'une première fonction de plan d'utilisateur associée au premier réseau ; et/ou
dans lequel la deuxième information du message de demande de pilotage (S10) comprend un DNAI d'une deuxième fonction de plan d'utilisateur associée au deuxième réseau ;
et/ou
dans lequel la première information du message de demande de pilotage (S10) comprend un premier identifiant, ID, de service AF de l'AF (42) ; et/ou
dans lequel la deuxième information du message de demande de pilotage (S10) comprend un deuxième ID de service AF de la deuxième AF (38).

8. Le procédé selon la revendication 7,
dans lequel le réseau est un réseau central 5G.

9. Un support de stockage non transitoire lisible par ordinateur stockant des instructions qui, lorsque exécutées par un processeur, mettent en oeuvre un procédé d'actionnement d'une fonction de gestion de session d'un réseau de radiocommunication mobile selon la revendication 5 ou 6.

10. Un support de stockage non transitoire lisible par ordinateur stockant des instructions qui, lorsque exécutées par un processeur, mettent en oeuvre un procédé d'actionnement d'une fonction d'application d'un réseau de radiocommunication mobile selon la revendication 7 ou 8.
